# EUROPEAN PATENT SPECIFICATION

(11) **EP 0 761 700 B1**
(45) Date of publication and mention of the grant of the patent: **05.07.2000**
(21) Application number: 96306296.3
(22) Date of filing: 30.08.1996
(51) Int. Cl.: C08F 210/16, C08F 4/654, C08F 4/646, C08F 2/34, C08J 5/18

(54) **Propylene-ethylene random copolymer, process for producing the same and film thereof**
Statistisches Propylen-Ethylen-Copolymer, Verfahren zu seiner Herstellung und daraus hergestellter Film
Copolymère d'éthylène-propylène statistique, procédé pour sa préparation et film obtenu à partir de celui-ci

(30) Priority: 31.08.1995 JP 22416095
(43) Date of publication of application: 12.03.1997
(73) Proprietor: SUMITOMO CHEMICAL COMPANY LIMITED, Osaka-shi, Osaka 541-0041 (JP)
(72) Inventor: Ima, Seiichiro, Ichihara-shi, Chiba (JP); Wakamatsu, Kazuki, Sodegaura-shi, Chiba (JP); Kishiro, Shigeki, Ichihara-shi, Chiba (JP)
(74) Representative: Cresswell, Thomas Anthony

(56) References cited:
- EP-A- 0 318 049
- EP-A- 0 341 724
- EP-A- 0 384 263
- EP-A- 0 450 456
- EP-A- 0 622 382
- EP-A- 0 629 632
- DE-A- 3 732 953

## Description

The present invention relates to a propylene-ethylene random copolymer, and a film thereof. More particularly, the present invention relates to a propylene-ethylene random copolymer which gives a film having an excellent appearance (little bleed whitening) and an excellent balance between low-temperature heat-sealing property and rigidity, and a film thereof.

A film of polypropylene has widely been used in the field of packaging such as food packaging, textile and packaging, because of excellent appearance, heat-sealing property, heat resistance and rigidity.

A propylene-ethylene random copolymer has widely been used in the field of film because it is superior in strength at low temperature to a propylene homopolymer and can be heat-sealed at low temperature.

As a process for producing the propylene-ethylene random copolymer, a solvent polymerization process or a bulk polymerization process has hitherto been known.

In these polymerization processes, a copolymer is obtained by polymerizing propylene and ethylene in a solvent (e.g. n-heptane, n-hexane) or a mixture of liquid monomer (e.g. propylene, ethylene) to be polymerized and optionally further additional post-treating. Therefore, a low-molecular weight polymer component having an influence on blocking resistance, and bleed whitening, is dissolved in the liquid medium such as the solvent or the liquid monomer and removed. In this respect, these processes impart preferable characteristics. On the other hand, there are arisen the following problems: (1) a copolymer component effective for heat-sealing property at low temperature is dissolved and removed; or (2) when an amount of ethylene is increased, the copolymer can not be produced because the copolymer is dissolved in the liquid medium. Therefore, a trial of producing a material capable of heat sealing at low temperature according to these polymerization processes causes a large limitation, and the production by an industrially advantageous process has not been substantially accomplished.

Therefore, production according to a so-called gas phase process, wherein a solvent or liquid monomer does not substantially exist, is tried for the purpose of resolution of the above problems. However, when a conventional catalyst is merely applied to the gas phase polymerization process, the component giving a bad influence on blocking resistance and bleed whitening remains in the product, which results in deterioration of performances of the film.

EP-A-0 450 456 discloses copolymers of propylene with other 1-alkenes, obtainable by gas phase polymerization of a mixture of propylene and another 1-alkene, with the aid of a Ziegler-Natta catalyst system which, besides a titanium-containing solid component, contains an aluminum component and an electron donor.

EP-A-0 341 724 discloses a process for the copolymerization of at least the two comonomers, propylene and ethylene, in the gas phase, with a catalyst system comprising (i) a solid catalyst precursor, which includes magnesium, titanium, a halogen, and a specified polycarboxylic acid ester; (ii) a hydrocarbyl aluminum cocatalyst; and (iii) a silicon compound containing at least one silicon-oxygen-carbon group.

EP-A-0 629 632 discloses a class of transition metal compounds containing a transition metal of Group IVa, Group Va or Group VIa of the periodic table and olefin polymerization catalysts comprising them.

The present inventors have intensively studied about a propylene-ethylene random copolymer which gives a film having an excellent appearance (little bleed whitening) and an excellent balance between low-temperature heat-sealing properties and rigidity without deteriorating transparency as one of preferable characteristics of the film of polypropylene, and a film thereof, according to a gas phase process which has never been accomplished by the prior art. As a result, it has been found that the object can be accomplished by a propylene random copolymer obtained under specific polymerization conditions, wherein the content of a xylene-soluble portion at 20°C is within a specific range. Thus, the present invention has been accomplished.

An object of the present invention is to provide a propylene-ethylene random copolymer which gives a film having an excellent appearance (little bleed whitening) and an excellent balance between low-temperature heat-sealing property and rigidity without deteriorating transparency as one of preferable characteristics of the film of polypropylene, and a film thereof.

The present invention accordingly provides a propylene-ethylene random copolymer obtainable by copolymerizing propylene with ethylene in the gas phase, with a catalyst comprising:
(A) a solid catalyst component comprising magnesium, titanium, a halogen and an electron donor;
(B) an organoaluminum compound having at least one Al-carbon bond in its molecule; and
(C) an electron donative compound;
wherein
(1) the ethylene content (E) of the copolymer is from 4.0 to 6.5% by weight,
(2) the content (D) of the xylene-soluble portion at 20°C of the copolymer satisfies D ≤ E + 1.5 (% by weight), and
(3) the melt flow rate of the copolymer is 3 to 20 g/10 minutes.

The present invention also provides a process for producing a propylene-ethylene random copolymer according to the invention, which comprises copolymerizing propylene with ethylene in the gas phase in a concentration of ethylene in the gas phase of 2 to 5% by volume, using a catalyst comprising:
(A) a solid catalyst component comprising magnesium, titanium, a halogen and an electron donor;
(B) an organoaluminum compound having at least one Al-carbon bond in its molecule; and
(C) an electron donative compound, the molar ratio of the component (C) to an Al atom in the component (B) being from 0.15 to 1.0.

The present invention also provides a film obtainable by melt-extruding a propylene-ethylene random copolymer according to the invention, generally having a bleed whitening (Δhaze) of not more than 1.5%, a heat-sealing temperature of not more than 130°C and a Young's modulus of not less than 2500 kg/cm².

The present invention also provides a propylene-ethylene random copolymer according to the invention in shaped form, and a film laminate comprising a heat sealing layer, which layer comprises a propylene-ethylene random copolymer according to the invention.

Other objects and advantages of the present invention will be apparent from the description below.

The propylene-ethylene random copolymer of the present invention is obtainable using a Ziegler-Natta catalyst containing titanium, magnesium, a halogen and an electron donor as an essential component under specific conditions. That is, the propylene-ethylene copolymer is obtainable by a process for copolymerizing propylene with ethylene according to a gas phase polymerization process, with a catalyst comprising:
(A) a solid catalyst component containing magnesium, titanium, a halogen and an electron donor as an essential component;
(B) an organic aluminum compound; and
(C) an electron donative compound.

Examples of the process for producing the solid catalyst component used in the present invention include processes disclosed in Japanese Patent Kokai Nos. 54-94590, 55-36203, 56-41206 and 57-59916, U.S.Patent Nos.4,412,049, 4,672,050, 4,971,937, 4,952,649, 4,157,435, 4,107,413 and 4,983,561, and EP 0 045 975 A.

As the solid catalyst component (A) containing magnesium, titanium, a halogen and an electron donor as an essential component used in the present invention, there can be used one which is generally referred to as a titanium-magnesium complex type catalyst and can be obtained by contacting a titanium compound, a magnesium compound and an electron donor.

Specific examples of these processes include the following.
(1) Method of reacting a liquid magnesium compound or a complex of a magnesium compound and an electron donor with a precipitating agent, followed by treating with a titanium compound or a titanium compound and an electron donor.
(2) Method of treating a solid magnesium compound or a complex of a solid magnesium compound and an electron donor with a titanium compound or a titanium compound and electron donor.
(3) Method of reacting a liquid magnesium compound with a liquid titanium compound in the presence of an electron donor to precipitate a solid titanium complex.
(4) Method of further treating the reaction product obtained in the item (1), (2) or (3) with a titanium compound or a titanium compound and an electron donor.
(5) Method of treating a solid product, which is obtained by reducing an alkoxytitanium compound with an organomagnesium compound such as Grignard compound in the presence of an organic silicon compound having an Si-O bond in the presence or absence of an ester of an organic acid, with the ester and treating the thus obtained ester-treated solid product with a mixture of an ether compound and TiCl₄ or a mixture of an ether compound, TiCl₄ and the ester of an organic acid.
(6) Method of treating a reaction product of a metal oxide, dihydrocarbyl magnesium and halogen-containing alcohol with a halogenating agent or not, followed by bringing into contact with an electron donor and a titanium compound.
(7) Method of treating a magnesium compound (e.g. magnesium salt of an organic acid, alkoxymagnesium, etc.) with a halogenating agent or not, followed by bringing into contact with an electron donor and a titanium compound.
(8) Method of treating the compounds obtained in the above items (1) to (7) with a halogen, a halogen compound or an aromatic hydrocarbon.

Among these methods for synthesizing a solid catalyst, the methods described in the above items (1) to (5) are preferably used and the method described in the item (5) is used more preferably. Among the method described in the item (5), there can be preferably used a method of reducing an alkoxytitanium compound with an organomagnesium compound such as a Grignard reagent in the presence of an organic silicon compound and an ester compound.

The titanium compound used for synthesizing the solid catalyst component is represented by the general formula:

Ti(OR)_{b}X_{4-b}

wherein R is a hydrocarbon group having 1 to 20 carbon atoms; X is a halogen atom; and b is a numeral satisfying 0 < b ≤ 4.

Specific examples of hydrocarbon groups within the definition of R and of other symbols hereinafter include alkyl groups such as methyl, ethyl, n-propyl, iso-propyl, n-butyl, iso-butyl, n-amyl, iso-amyl, n-hexyl, n-heptyl, n-octyl, n-decyl, or n-dodecyl; aryl groups such as phenyl, cresyl, 2,3-, 2,4-, 3,4-, or 3,5-xylyl, or naphthyl; cycloalkyl groups such as cyclohexyl or cyclopentyl; allyl groups such as propenyl; and aralkyl groups such as benzyl.

As the magnesium component, there can be used any organomagnesium compounds containing a magnesium-carbon bond. Particularly, there can be suitably used a Grignard compound represented by the general formula RMgX (wherein R represents a hydrocarbon group having 1 to 20 carbon atoms and X is a halogen atom) and a magnesium compound represented by the general formula RR'Mg (wherein R and R' represent a hydrocarbon group having 1 to 20 carbon atoms and may be the same or different).

Examples of the Grignard compound include methylmagnesium chloride, ethylmagnesium chloride, ethylmagnesium bromide, methylmagnesium iodide, n-propylmagnesium chloride, n-propylmagnesium bromide, n-butylmagnesium chloride, n-butylmagnesium bromide, sec-butylmagnesium chloride, sec-butylmagnesium bromide, tert-butylmagnesium chloride, tert-butylmagnesium bromide, n-amylmagnesium chloride, iso-amylmagnesium chloride, phenylmagnesium chloride, and phenylmagnesium bromide. Examples of the magnesium compound represented by RR'Mg include diethylmagnesium, di-n-propylmagnesium, di-iso-propylmagnesium, di-n-butylmagnesium, di-sec-butylmagnesium, di-tert-butylmagnesium, n-butyl-sec-butylmagnesium, di-n-amylmagnesium, and diphenylmagnesium.

As the organic silicon compound having an Si-O bond used in the above-described process of the synthesis example (5) of the solid catalyst component, there can be used those represented by the following general formula:

Si(OR²)ₘR³ ₄₋ₘ ;

R⁴(R⁵ ₂SiO)ₚSiR⁶ ₃ ;

or

(R⁷ ₂SiO)_{q}

wherein R² represents a hydrocarbon group having 1 to 20 carbon atoms; R³, R⁴, R⁵, R⁶ and R⁷ respectively represent a hydrocarbon group having 1 to 20 carbon atoms or a hydrogen atom; m is a numeral satisfying 0 < m ≤ 4: p is an integer of 1 to 1000; and q is an integer of 2 to 1000.

Specific examples of the organic silicon compound include tetramethoxysilane, dimethyldimethoxysilane, tetraethoxysilane, triethoxysilane, diethoxydiethylsilane, ethoxytriethylsilane, tetraisopropoxysilane, diisopropoxydiisopropylsilane, tetra-n-propoxysilane, di-n-propoxydi-n-propylsilane, tetra-n-butoxysilane, di-n-butoxy-n-butylsilane, dicyclopentoxydiethylsilane, diethoxydiphenylsilane, cyclohexyloxytrimethylsilane, phenoxytrimethylsilane, tetraphenoxysilane, triethoxyphenylsilane, hexamethyldisiloxane, hexaethyldisiloxane, hexa-n-propyldisiloxane, octaethyltrisiloxane, dimethylpolysiloxane, diphenylpolysiloxane, methylhydropolysiloxane, and phenylhydropolysiloxane.

Among these organic silicon compounds, an alkoxysilane compound represented by the general formula Si(OR²)ₘR³ ₄₋ₘ is preferred. Preferably, m satisfies 1 ≤ m ≤ 4 and a tetraalkoxysilane wherein m is 4 is particularly preferred.

As the electron donor used in the synthesis of the solid catalyst component, there can be used the same one as that of the electron donative compound (C) described hereinafter but an ester of an organic acid is preferred.

As the ester of an organic acid, mono- and polyhydric carboxylic acid esters are used. Examples thereof include aliphatic carboxylic acid esters, olefin carboxylic acid esters, alicyclic carboxylic acid esters, and aromatic carboxylic acid esters. Specific examples thereof include methyl acetate, ethyl acetate, phenyl acetate, methyl propionate, ethyl propionate, ethyl butyrate, ethyl valerate, methyl acrylate, ethyl acrylate, methyl methacrylate, ethyl benzoate, n-butyl benzoate, methyl toluate, ethyl toluate, ethyl anisate, diethyl succinate, di-n-butyl succinate, diethyl malonate, di-n-butyl malonate, dimethyl maleate, di-n-butyl maleate, diethyl itaconate, di-n-butyl itaconate, monoethyl phthalate, dimethyl phthalate, methyl ethyl phthalate, diethyl phthalate, di-n-propyl phthalate, diisopropyl phthalate, di-n-butyl phthalate, diisobutyl phthalate, di-n-octyl phthalate, and diphenyl phthalate.

Among these ester compounds, esters of olefin carboxylic acid (e.g. methacrylate, maleate) and esters of phthalic acid are preferred. Diesters of phthalic acid are more preferred.

The solid catalyst component (A) can be used alone, and can also be used after impregnating a porous substance such as an inorganic oxide or an organic polymer with it.

Examples of the porous inorganic oxide include SiO₂, Al₂O₃, MgO, TiO₂, ZrO₂, SiO₂-Al₂O₃ double oxide, MgO₂-Al₂O₃ double oxide, and MgO-SiO₂-Al₂O₃ compound oxide. Examples of the porous organic polymer include styrene polymers, (meth)acrylate polymers, acrylonitrile polymers, vinyl chloride polymers and olefin polymers such as polystyrene, a styrene-divinylbenzene copolymer, a styrene-N,N'-alkylenedimethacrylamide copolymer, a styrene-ethyleneglycoldimethacrylate copolymer, polyethylacrylate, a methylacrylate-divinylbenzene copolymer, an ethylacrylate-divinylbenzene copolymer, polymethylmethacrylate, a methylmethacrylate-divinylbenzene copolymer, polyethyleneglycoldimethacrylate, polyacrylonitrile, an acrylonitrile-divinylbenzene copolymer, polyvinylchloride, polyvinylpyrrolidone, polyvinylpyridine, ethylvinylbenzene-divinylbenzene copolymer, polyethylene, ethylene-methylacrylate copolymer, and polypropylene. Among these porous substances, SiO₂, Al₂O₃ and a styrene-divinylbenzene copolymer are preferably used.

The organoaluminum compound (B) used in the present invention has at least one Al-carbon bond in its molecule.

Examples of the organoaluminum compound include trialkylaluminums such as triethylaluminum, triisobutylaluminum, or trihexylaluminum; dialkylaluminum halides such as diethylaluminum halide or diisobutylaluminum halide; a mixture of the trialkylaluminum and the dialkylaluminum halide; and alkylalumoxanes such as tetraethyldialumoxane or tetrabutyldialumoxane.

Among these organoaluminum compounds, trialkylaluminums, a mixture of the trialkylaluminum and the dialkylaluminum halide and alkylalumoxanes are preferred. Particularly, triethylaluminum, a mixture of triisobutylaluminum and diethylaluminum chloride and tetraethyldialumoxane are preferred.

The amount of the organoaluminum compound used can be selected within a wide range, for example 1 to 1000 mol, preferably 5 to 600 mol, based on 1 mol of the titanium atom in the solid catalyst.

Examples of the electron donative compound (C) used in the present invention include oxygen-containing electron donors such as alcohols, phenols, ketones, aldehydes, carboxylic acids, esters of organic or inorganic acid, ethers, acid amides, or acid anhydrides; and nitrogen-containing electron donors such as ammonias, amines, nitriles, or isocyanates. Among these electron donors, esters of inorganic acid and ethers are preferably used.

Preferred examples of the esters of inorganic acid include silicon compounds represented by the general formula:

R¹⁶ₙSi(OR¹⁷)₄₋ₙ

wherein R¹⁶ is a hydrocarbon group having 1 to 20 carbon atoms or a hydrogen atom; R¹⁷ is a hydrocarbon group having 1 to 20 carbon atoms, provided that R¹⁶ and R¹⁷ may have the same or different substituent in its molecule; and n satisfies 0 ≤ n < 4. Specific examples thereof include tetramethoxysilane, tetraethoxysilane, tetra-n-butoxysilane, tetraphenoxysilane, methyltrimethoxysilane, ethyltrimethoxysilane, n-butyltrimethoxysilane, isobutyltrimethoxysilane, t-butyltrimethoxysilane, isopropyltrimethoxysilane, cyclohexyltrimethoxysilane, phenyltrimethoxysilane, vinyltrimethoxysilane, dimethyldimethoxysilane, diethyldimethoxysilane, dipropyldimethoxysilane, propylmethyldimethoxysilane, diisopropyldimethoxysilane, di-n-butyldimethoxysilane, diisobutyldimethoxysilane, di-t-butyldimethoxysilane, n-butylmethyldimethoxysilane, butylethyldimethoxysilane, t-butylmethyldimethoxysilane, isobutylisopropyldimethoxysilane, t-butylisopropyldimethoxysilane, hexylmethyldimethoxysilane, hexylethyldimethoxysilane, n-dodecylmethyldimethoxysilane, dicyclopentyldimethoxysilane, cyclopentylmethyldimethoxysilane, cyclopentylethyldimethoxysilane, cyclopentylisopropyldimethoxysilane, cyclopentylisobutyldimethoxysilane, cyclopentyl-t-butyldimethoxysilane, dicyclohexyldimethoxysilane, cyclohexylmethyldimethoxysilane, cyclohexylethyldimethoxysilane, cyclohexylisopropyldimethoxysilane, cyclohexylisobutyldimethoxysilane, cyclohexyl-t-butyldimethoxysilane, cyclohexylcyclopentyldimethoxysilane, cyclohexylphenyldimethoxysilane, diphenyldimethoxysilane, phenylmethyldimethoxysilane, phenylisopropyldimethoxysilane, phenylisobutyldimethoxysilane, phenyl-t-butyldimethoxysilane, phenylcyclopentyldimethoxysilane, vinylmethyldimethoxysilane, methyltriethoxysilane, ethyltriethoxysilane, n-butyltriethoxysilane, isobutyltriethoxysilane, t-butyltriethoxysilane, isopropyltriethoxysilane, cyclohexyltriethoxysilane, phenyltriethoxysilane, vinyltriethoxysilane, dimethyldiethoxysilane, diethyldiethoxysilane, di-n-propyldiethoxysilane, propyldiethoxysilane, diisopropyldiethoxysilane, dibutyldiethoxysilane, diisobutuldiethoxysilane, di-t-butyldiethoxysilane, n-butylmethyldiethoxysilane, n-butylethyldiethoxysilane, t-butylmethylethoxysilane, n-hexylmethyldiethoxysilane, n-hexylethyldiethoxysilane, n-dodecylmethyldiethoxysilane, dicyclopentyldiethoxysilane, dicyclohexyldiethoxysilane, cyclohexylmethyldiethoxysilane, cyclohexylethyldiethoxysilane, diphenyldiethoxysilane, phenylmethyldiethoxysilane, vinylmethyldiethoxysilane, ethyltriisopropoxysilane, vinyltri-n-butoxysilane, phenyltri-t-butoxysilane, 2-norbornanetrimethoxysilane, 2-norbornanetriethoxysilane, 2-norbornanemethyldimethoxysilane, trimethylphenoxysilane, and methyltriallyloxysilane.

Preferred examples of the ethers include dialkylethers and diether compounds represented by the general formula: 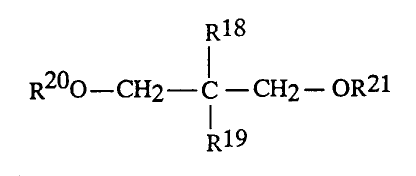 Wherein R¹⁸ to R²¹ respectively represent a linear or branched alkyl, alicyclic, aryl or arylalkyl group having up to 20 carbon atoms and R¹⁸ or R¹⁹ may be hydrogen. Specific examples thereof include diethyl ether, di-n-propyl ether, diisopropyl ether, di-n-butyl ether, di-n-amyl ether, diisoamyl ether, dineopentyl ether, di-n-hexyl ether, di-n-octyl ether, methyl n-butyl ether, methyl isoamyl ether, ethyl isobutyl ether, 2,2-diisobutyl-1,3-dimethoxypropane, 2-isopropyl-2-isopentyl-1,3-dimethoxyprop ane, 2,2-bis(cyclohexylmethyl)-1,3-dimethoxypropane, 2-isopropyl-2-(3',7'-dimethyloctyl)-1,3-dimethoxypropane, 2,2-diisopropyl-1,3-dimethoxypropane, 2-isopropyl-2-cyclohexylmethyl-1,3-dimethoxypropane, 2,2-dicyclohexyl-1,3-dimethoxypropane, 2-isopropyl-2-isobutyl-1,3-dimethoxypropane, 2,2-diisopropyl-1,3-dimethoxypropane, 2,2-di-n-propyl-1,3-dimethoxypropane, 2-isopropyl-2-cyclohexyl-1,3-dimethoxypropane, 2-isopropyl-2-cyclopentyl-1,3-dimethoxypropane, 2,2-dicyclopentyl-1,3-dimethoxypropane, and 2-n-heptyl-2-n-pentyl-1,3-dimethoxypropane.

Among these electron donative compounds, organic silicon compounds represented by the general formula R²²R²³Si(OR²⁴)₂ are particularly preferred. In the formula, R²² is a hydrocarbon group having 3 to 20 carbon atoms wherein a carbon adjacent to Si is secondary one or tertiary one, and specific examples thereof include branched alkyl groups such as isopropyl, sec-butyl, t-butyl, or t-amyl; cycloalkyl groups such as cyclopentyl or cyclohexyl; cycloalkenyl groups such as cyclopentenyl; and aryl groups such as phenyl or tolyl. In the formula, R²³ is a hydrocarbon group having 1 to 20 carbon atoms, and specific examples thereof include linear alkyl groups such as methyl, ethyl, n-propyl, n-butyl, or n-pentyl; branched alkyl groups such as isopropyl, sec-butyl, t-butyl, or t-amyl; cycloalkyl groups such as cyclopentyl or cyclohexyl; cycloalkenyl groups such as cyclopentenyl; and aryl groups such as phenyl or tolyl. In the formula, R²⁴ is a hydrocarbon group having 1 to 20 carbon atoms, preferably hydrocarbon group having 1 to 5 carbon atoms(e.g. methyl, ethyl, n-propyl, isopropyl, n-butyl).

Specific examples of the organic silicon compound used as the electron donative compound include diisopropyldimethoxysilane, diisobutyldimethoxysilane, di-t-butyldimethoxysilane, t-butylmethyldimethoxysilane, isobutylisopropyldimethoxysilane, t-butylisopropyldimethoxysilane, dicyclopentyldimethoxysilane, cyclopentylisopropyldimethoxysilane, cyclopentylisobutyldimethoxysilane, cyclopentyl-t-butyldimethoxysilane, dicyclohexyldimethoxysilane, cyclohexylmethyldimethoxysilane, cyclohexylethyldimethoxysilane, cyclohexylisopropyldimethoxysilane, cyclohexylisobutyldimethoxysilane, cyclohexyl-t-butyldimethoxysilane, cyclohexylcyclopentyldimethoxysilane, cyclohexylphenyldimethoxysilane, diphenyldimethoxysilane, phenylmethyldimethoxysilane, phenylisopropyldimethoxysilane, phenylisobutyldimethoxysilane, phenyl-t-butyldimethocysilane, phenylcyclopentyldimethoxysilane, diisopropyldiethoxysilane, diisobutyldiethoxysilane, di-t-butyldiethoxysilane, t-butylmethyldiethoxysilane, dicyclopentyldiethoxysilane, dicyclohexyldiethoxysilane, cyclohexylmethyldiethoxysilane, cyclohexylethyldiethoxysilane, diphenyldiethoxysilane, phenylmethyldiethoxysilane, and 2-norbornanemethyldimethoxysilane.

The molar ratio of the Al atom in the component (B) to the Ti atom in the component (A) is preferably 1 to 1000, more preferably 5 to 200. The molar ratio of the component (C) to the Al atom in the component (B) is preferably 0.15 to 1.0, more preferably 0.2 to 0.7. The polymerization is carried out by feeding propylene, ethylene and, generally, hydrogen as a molecular weight regulator under conditions of a polymerization temperature of usually 20 to 150°C, preferably from 50 to 95°C, more preferably from 70 to 90°C, and a polymerization pressure of usually atmospheric pressure to 40 kg/cm²G, preferably from 2 to 30 kg/cm²G, substantially in the absence of a liquid medium.

The concentration of ethylene in the gas phase in the polymerization is generally 2 to 5% by volume.

According to the process of the present invention, a powdered propylene-ethylene random copolymer can be obtained. The intrinsic viscosity of the copolymer measured in tetralin at 135°C is preferably not less than 2.0 dl/g. There is a tendency to deterioration of the appearance due to bleed whitening when the intrinsic viscosity is less than 2.0 dl/g.

The amount of the xylene-soluble portion at 20°C contained in the propylene-ethylene random copolymer varies depending on the catalyst, catalyst composition (proportion of the catalyst components (A), (B) and (C)), and polymerization temperature, and, therefore, the selection of the polymerization conditions is important.

When the ethylene content or amount of the xylene-soluble portion at 20°C is not within the above range of the present invention, it is difficult to obtain the film having an excellent appearance and an excellent balance between low-temperature heat-sealing property and rigidity.

When the ethylene content of the propylene-ethylene random copolymer is less than 3.5% by weight, the low-temperature heat-sealing property is inferior. On the other hand, when it exceeds 7.0% by weight, the heat resistance and rigidity become inferior and deterioration of the appearance due to bleed whitening occur. The ethylene content according to the present invention is from 4.0 to 6.5% by weight.

Even if the ethylene content is within the above range, it is important that the content of the xylene-soluble portion at 20°C (D) satisfies D ≤ E + 1.5 (% by weight). When the content of the xylene-soluble portion at 20°C exceeds the above range, the appearance due to bleed whitening and rigidity become poor.

The melt flow rate of the propylene-ethylene random copolymer (powder) of the present invention can be adjusted by melt-kneading the random copolymer with, for example, a melt extruder or a Banbury mixer in the presence of an antioxidant, and for example, in the presence or absence of an organic peroxide.

The melt flow rate of the propylene-ethylene random copolymer is 3 to 20 g/10 minutes, in view of transparency and high-speed processability on film-forming.

It is possible to obtain a film, which causes no bleed whitening (Δhaze: not more than 1.5%) and has a heat-sealing temperature of not more than 130°C, high Young's modulus (not less than 2500 kg/cm²), excellent appearance and excellent balance between low-temperature heat-sealing property and rigidity, by film-forming according to melt extrusion of the copolymer of the present invention.

The film of the present invention is preferably a film having a thickness of 10 to 500 µ, more preferably non-stretched film having a thickness of 10 to 100 µ. The film can be suitably used as at least one layer component in the production of a multilayer film according to a coextrusion film-forming process because it has the above-described preferable characteristics.

As a forming process of the film of the present invention, there may be used any conventional processes, for example, a melt extrusion molding process such as a T-die film-forming process or tubular film-forming process. Among these, the T-die film forming process wherein high-speed film-forming is conducted with a large-sized film-forming machine is preferred.

There can be optionally added antioxidants, neutralizing agents, lubricants, anti-blocking agents, and antistatic agents, which are normally used, to the propylene-ethylene random copolymer and film of the present invention.

### EXAMPLE

The present invention is explained by the following Examples in detail.

The respective measured values in the present invention were determined by the following methods.
(1) Ethylene content was determined by the method described in Polymer Analysis Hand Book (1985, published by Asakura Shoten), page 256, item of "(i) Random Copolymer" according to an IR spectrum method.
(2) Intrinsic viscosity ([η]) was measured in tetralin at 135°C by using an Ubbelohde viscometer.
(3) Xylene-soluble portion at 20°C
   After a sample (1 g) was completely dissolved in boiled xylene (100 ml), the resulting solution was cooled to 20°C and allowed to stand for 4 hours. After separating into a deposited material and a filtrate by filtration, the filtrate was dried up and dried at 70°C under reduced pressure. A weight of the resultant substance was measured to determine the content (% by weight).
(4) Melt flow rate (MFR) was measured by the method of the condition-14 according to JIS K7210.
(5) Transparency (haze) was measured according to JIS K7105.
(6) Bleed whitening (Δhaze)
   A haze after heat treatment at 60°C for 24 hours and that before heat treatment were measured and a difference between them was taken as a Δhaze.
(7) Heat-sealing temperature
   A heat-sealed film having a width of 25 mm obtained by laminating the film surfaces each other and press-bonding under a load of 2 kg/cm² for 2 seconds with a heated heat sealer was allowed to stand overnight, and then peeled off at 23°C under conditions of a peeling rate of 200 mm/minute and a peeling angle of 180°. The temperature of the heat sealer where the resultant peeling resistance becomes 300 g/25 mm was taken as the heat-sealing temperature.
(8) Young's modulus
   A specimen having a width of 20 mm was cut in the longitudinal direction (MD) and a stress-strain curve was determined with a tensile tester under conditions of a chuck distance of 60 mm and a tensile speed of 5 mm/minute to measure an initial modulus.

### Reference Example 1

### (a) Synthesis of organomagnesium compound

After an inner atmosphere of a 1000 ml flask equipped with a stirrer, a dropping funnel and a thermometer was replaced with argon, magnesium flakes for Grignard compound (32.0 g) were introduced into the flask. n-butyl chloride (120 g) and di-n-butyl ether (500 ml) were charged in the dropping funnel and about 30 ml of them was added dropwise on magnesium in the flask to initiate the reaction. After the initiation of the reaction, dropping was continued at 50°C over 4 hours. After dropping, the reaction was continued at 60°C for additional one hour. Then, the reaction solution was cooled to room temperature and the solid matter was removed by filtration. n-butylmagnesium chloride in the sampled reaction solution was hydrolyzed with 1N sulfuric acid and then subjected to back titration with an aqueous 1N sodium hydroxide solution to determine the concentration (phenolphthalein was used as an indicator). As a result, the concentration was 2.1 mol/liter.

### (b) Synthesis of solid product

After an inner atmosphere of a 500 ml flask equipped with a stirrer and a dropping funnel was replaced with argon, n-hexane (290 ml), tetra-n-butoxytitanium (9.3 ml, 9.3 g, 27 mmol), diisobutyl phthalate (8.5 ml, 8.8 g, 32 mmol) and tetraethoxysilane (79.1 ml, 74.4 g, 357 mmol) were charged into the flask to give a homogeneous solution. Then, the organomagnesium compound solution (189 ml) synthesized in the above (a) was gradually added dropwise from the dropping funnel over 2 hours while maintaining the inside temperature of the flask at 5°C. After dropping, the obtained reaction mixture was stirred at room temperature for additional one hour and separated into a solid and a liquid. After washing repeatedly three times with 300 ml of hexane and three times with 300 ml of toluene, 270 ml of toluene was added. A part of the resulting slurry was sampled and subjected to composition analysis. As a result, 1.8% by weight of the titanium atom, 0.5% by weight of the phthalic acid ester, 30.7% by weight of ethoxy group and 3.3% by weight of butoxy group were contained in the solid product. A slurry concentration was 0.140 g/ml.

### (c) Synthesis of ester-treated solid

After an inner atmosphere of a 200 ml flask equipped with a stirrer, a dropping funnel and a thermometer was replaced with argon, 84 ml of a slurry containing the solid product obtained in the above (b) was charged into the flask and a supernatant (12.1 ml) was taken out. Then, diisobutyl phthalate (7.8 ml, 29 mmol) was added and the reaction was carried out at 95°C for 30 minutes. After completion of the reaction, the reaction mixture was separated into a solid and a liquid and washed twice with 59 ml of toluene.

### (d) Synthesis (activation treatment) of solid catalyst component

After washing in the above (c), toluene (15.3 ml), diisobutyl phthalate (0.66 ml, 2.5 mmol), butyl ether (1.2 ml, 6.9 mmol) and titanium tetrachloride (23.4 ml, 0.213 mmol) were added to the flask and the reaction was conducted at 95°C for 3 hours. After completion of the reaction, the reaction mixture was separated into a solid and a liquid at the same temperature and washed twice with 59 ml of toluene at the same temperature. Then, toluene (12.0 ml), n-butyl ether (1.2 ml, 6.9 mmol) and titanium tetrachloride (11.7 ml, 0.106 mmol) were added and the reaction was conducted at 95°C for one hour. After completion of the reaction, the reaction mixture was separated into a solid and a liquid at the same temperature, washed three times with 59 ml of toluene and three times with 59 ml of n-hexane at the same temperature, and then dried under reduced pressure to obtain 8.1 g of a solid catalyst component.

In the solid catalyst component obtained, 1.4% by weight of a titanium atom, 20.3% by weight of a magnesium atom, 10.0% by weight of a phthalate and 62.6% by weight of a halogen atom were contained. The solid catalyst component was observed with a microscope. As a result, it had good particle properties containing no fine powder.

### Example 1

### (a) Preliminary polymerization

Sufficiently purified hexane (150L) was added to a 250L reactor equipped with a stirrer and, after sufficiently replacing the inside of the system with nitrogen, triethylaluminum (hereinafter referred to as "TEA") (3.2 mol), cyclohexylethyldimethoxysilane (hereinafter referred to as "CHEDMS") (0.32 mol) and the solid catalyst obtained in Reference Example 1 (51.8 g, in terms of Ti atom) were added. Then, propylene (2.8 kg) was continuously added over 2 hours while maintaining at 25°C.

### (b) Polymerization

Using a polymerization vessel having an internal volume of 1000L, a continuous gas phase polymerization was carried out while feeding a preliminary polymerized slurry (1.1 g/hour) as the solid catalyst component, TEA (52 mmol/hour) and CHEDMS (16 mmol/hour) [CHEDMS/TEA (molar ratio) = 0.31] under the conditions of feeding propylene, ethylene and hydrogen so that a polymerization temperature of 75°C, a polymerization pressure of 18 kg/cm²G, an ethylene concentration in gas phase part of 2.29 % by volume and a hydrogen concentration of 0.15 % by volume can be maintained.

The resulting copolymer had an intrinsic viscosity of 2.77 dl/g, an ethylene content of 4.3% by weight and a xylene-soluble fraction at 20°C of 4.1% by weight. To 100 parts by weight of this copolymer, 0.2 part by weight of calcium stearate, 0.1 part by weight of Sumilizer® BHT (manufactured by Sumitomo Chemical Co., Ltd.), 0.10 part by weight of Irganox 1010 (manufactured by Ciba Geigy Limited), 0.10 part by weight of erucic amide, 0.15 part by weight of finely-ground silica and 0.4 part by weight of 2,5-dimethyl-2,5-di(tertiary-butylperoxy)hexane (hereinafter referred to as "2,5-H") were added and, after mixing with a Henschel mixer in a nitrogen atmosphere, the mixture was melt-extruded to obtain pellets. MFR of the pellets was 7.6 g/10 minutes. Then, the resulting pellets were melt-extruded at a die temperature of 250°C with a 50 mmφ T-die film-forming apparatus and cooled by a cooling roll, wherein cooling water at 30°C is passed through, to obtain a non-stretched film having a thickness of 30 µ.

The characteristics value of polymer powder and MFR of pellets as well as transparency (haze), bleed whitening (Ahaze), heat-sealing temperature and Young's modulus of the resultant film are shown in Table 1.

### Example 2

A copolymer was produced in the same manner as in Example 1 except the ethylene concentration in the gas phase and hydrogen concentration were changed to 3.00% by volume and 0.13% by volume, respectively. Pellets were obtained and evaluated in the same manner as in Example except changing the amount of 2,5-H to 0.6 part by weight to 100 parts by weight of the copolymer.

The characteristics value of polymer powder and MFR of pellets as well as transparency (haze), bleed whitening (Δhaze), heat-sealing temperature and Young's modulus of the resultant film are shown in Table 1.

### Reference Example 2

### (a) Synthesis of solid product

After an inner atmosphere of a 500 ml flask equipped with a stirrer and a dropping funnel was replaced with argon, hexane (240 ml), tetra-n-butoxytitanium (5.4 g, 15.8 mmol) and tetraethoxysilane (61.4 g, 295 mmol) were charged into the flask to give a homogeneous solution. Then, the organomagnesium compound solution (150 ml) synthesized in Reference Example 1 (a) was gradually added dropwise from the dropping funnel over 4 hours while maintaining the inside temperature of the flask at 5°C. After completion of the dropping, the reaction mixture was stirred at room temperature for additional one hour and separated into a solid and a liquid. After the separated solid product was washed repeatedly three times with 240 ml of hexane and dried under reduced pressure, 45.0 g of a brown solid product was obtained.

1.7% by weight of the titanium atom, 33.8% by weight of ethoxy group and 2.9% by weight of butoxy group were contained in the solid product.

A clear diffraction peak was not observed in a wide-angle X-ray diffraction pattern due to Cu-Ka ray of this solid product and the solid product has an amorphous structure.

### (b) Synthesis of ester-treated solid

After an inner atmosphre of a 100 ml flask was replaced with argon, 6.5 g of the solid product synthesized in the above item (b), toluene (16.2 ml) and diisobutyl phthalate (4.3 ml, 16 mmol) were added and the reaction was carried out at 95°C for one hour.

### (c) Synthesis (activation treatment) of solid catalyst component

After washing in the above item (c), toluene (16.2 ml), diisobutyl phthalate (0.36 ml, 1.3 mmol), n-butyl ether (2.2 ml, 13 mmol) and titanium tetrachloride (38.0 ml, 346 mmol) were added to the flask and the reaction was conducted at 95°C for 3 hours. After completion of the reaction, the reaction mixture was separated into a solid and a liquid at the same temperature and washed twice with 33 ml of toluene at the same temperature. Then, the above-described treatment with a mixture of diisobutyl phthalate, butyl ether and titanium tetrachloride was repeated under the same condition, followed by washing three times with 33 ml of hexane to obtain 5.0 g of a yellow ochre-colored solid catalyst.

2.1% by weight of a titanium atom, 19.9% by weight of a magnesium atom, 12.7% by weight of a phthalate and 63.7% by weight of a halogen atom were contained in the solid catalyst component.

### Example 3

A copolymer was obtained in the same manner as in Example 1 except the ethylene concentration of the gas phase and hydrogen concentration were changed to 2.21% by volume and 0.13% by volume, respectively, the preliminary polymerized slurry described in Reference Example 2 was used, and TEA (51 mmol/hour) and CHEDMS (33 mmol/hour) [CHEDMS/TEA (molar ratio) = 0.65] were fed.

The copolymer was pelletized and subjected to film-forming evaluation in the same manner as in Example 1 except for changing the added amount of 2,5-H to 0.2 part by weight to 100 parts by weight of the copolymer.

The characteristics value of polymer powder and MFR of pellets as well as transparency (haze), bleed whitening (Δhaze), heat-sealing temperature and Young's modulus of the resultant film are shown in Table 1.

### Comparative Example 1

Using a polymerization vessel having an internal volume of 1000 L, a continuous gas phase polymerization was carried out while feeding the solid catalyst synthesized according to Example 3 of Japanese Patent Kokai No.3-46001 (1.1 g/hour), dimethylaluminum chloride (DEAC, 135 mmol/hour) and methyl methacrylate (MMA, 3.5 mmol/hour) [MMA/DEAC (molar ratio) = 0.03] under the conditions of feeding propylene, ethylene and hydrogen so that a polymerization temperature of 65°C, a polymerization pressure of 18 kg/cm²G, an ethylene concentration of gas phase part of 1.27 % by volume and a hydrogen concentration of 5.6 % by volume can be maintained. The copolymer obtained was pelletized and subjected to film-forming evaluation in the same manner as in Example 1 except for adding no 2,5-H.

The characteristics value of polymer powder and MFR of pellets as well as transparency (haze), bleed whitening (Δhaze), heat-sealing temperature and Young's modulus of the resultant film are shown in Table 1.

### Reference Example 3

To a 210 L reactor equipped with a stirrer, 2.4 mol (in TEA terms) of a product prepared previously by mixing TEA with phenyltrimethoxysilane (hereinafter referred to as "PTMS") [PTMS/TEA (molar ratio) = 0.15] in hexane, followed by reacting at 60°C for 15 hours, and 18.5 g (in terms of Ti atom) of the solid catalyst obtained in Reference Example 2 were added. Propylene was continuously added over 3.2 hours while maintaining at 20°C or less. Then, unreacted propylene and butane were purged, followed by flowing dry nitrogen to obtain a preliminary polymerized catalyst.

### Comparative Example 2

A copolymer was obtained in the same manner as in Example 1 except for changing the ethylene concentration of the gas phase and hydrogen concentration to 2.51% by volume and 0.47% by volume, respectively, and feeding the preliminary polymerized slurry obtained in Reference Example 3 (1.1 g/hour) as the solid catalyst component and the reaction product of TEA and PTMS [PTMS/TEA (molar ration) = 0.15] described in the Reference Example (50 mmol/hour, in TEA terms).

The copolymer was pelletized and subjected to film-forming evaluation in the same manner as in Example 1 except for adding no 2,5-H.

The characteristics value of polymer powder and MFR of pellets as well as transparency (haze), bleed whitening (Δhaze), heat-sealing temperature and Young's modulus of the resultant film are shown in Table 1.

### Comparative Example 3

A copolymer was obtained in the same manner as in Example 3 except the ethylene concentration of the gas phase and hydrogen concentration were changed to 2.68% by volume and 0.16% by volume, respectively, and TEA (51 mmol/hour) and CHEDMS (5.0 mmol/hour) [CHEDMS/TEA (molar ratio) = 0.10] were fed.

The copolymer was pelletized and subjected to film-forming evaluation in the same manner as in Example 1 except for changing the added amount of 2,5-H to 0.2 part by weight to 100 parts by weight of the copolymer.

The characteristics value of polymer powder and MFR of pellets as well as transparency (haze), bleed whitening (Δhaze), heat-sealing temperature and Young's modulus of the resultant film are shown in Table 1.

### Comparative Example 4

A copolymer was obtained in the same manner as in Example 3 except the ethylene concentration of the gas phase and hydrogen concentration were changed to 1.00% by volume and 0.07% by volume, respectively, and TEA (93 mmol/hour) and CHEDMS (6.8 mmol/hour) [CHEDMS/TEA (molar ratio) = 0.07] were fed.

The copolymer was pelletized and subjected to film-forming evaluation in the same manner as in Example 1 except for adding no 2,5-H.

The characteristics value of polymer powder and MFR of pellets as well as transparency (haze), bleed whitening (Δhaze), heat-sealing temperature and Young's modulus of the resultant film are shown in Table 1.

**Table 1**

| | Random copolymer powder | | | Pellet | Physical properties of film | | | |
|---|---|---|---|---|---|---|---|---|
| | [η] dl/g | Ethylene content, % by weight | Xylene-soluble part at 20°C % by weight | MFR, g/10 minutes | Haze % | Δ Haze % | Heat-sealing temperature °C | Young's modulus kg/cm² |
| Example 1 | 2.77 | 4.3 | 4.1 | 7.6 | 1.4 | 0.6 | 122 | 3500 |
| Example 2 | 2.89 | 5.8 | 6.1 | 6.1 | 2.8 | 1.4 | 117 | 3000 |
| Example 3 | 2.16 | 5.1 | 6.2 | 5.7 | 0.8 | 0.6 | 121 | 3400 |
| Comparative Example 1 | 1.72 | 3.3 | 5.4 | 11.6 | 2.0 | 0.6 | 135 | 4500 |
| Comparative Example 2 | 1.80 | 4.2 | 7.6 | 5.5 | 2.8 | 3.1 | 133 | 3600 |
| Comparative Example 3 | 2.07 | 5.5 | 8.5 | 1.4 | 1.3 | 5.1 | 123 | 3000 |
| Comparative Example 4 | 2.22 | 2.3 | 3.4 | 6.8 | 10.0 | 0 | 143 | 7000 |

According to the present invention, there can be obtained a propylene-ethylene random copolymer which gives a film, which causes no deterioration of an appearance due to bleed whitening and has an excellent balance between low-temperature heat-sealing properties and rigidity, and a film thereof.

## Claims

1. A propylene-ethylene random copolymer obtainable by copolymerizing propylene with ethylene in the gas phase, with a catalyst comprising:
(A) a solid catalyst component comprising magnesium, titanium, a halogen and an electron donor;
(B) an organoaluminum compound having at least one Al-carbon bond in its molecule; and
(C) an electron donative compound;
wherein
(1) the ethylene content (E) of the copolymer is from 4.0 to 6.5% by weight,
(2) the content (D) of the xylene-soluble portion at 20°C of the copolymer satisfies D ≤ E + 1.5 (% by weight), and
(3) the melt flow rate of the copolymer is 3 to 20 g/10 minutes.

2. A propylene-ethylene random copolymer according to claim 1, wherein the molar ratio of the component (C) to an Al atom in the component (B) in the catalyst is from 0.15 to 1.0, and the intrinsic viscosity measured in tetralin at 135°C is not less than 2.0 dl/g.

3. A propylene-ethylene random copolymer according to claim 1, wherein the component (A) is obtainable by treating a solid product, which is obtainable by reducing an alkoxytitanium compound with an organomagnesium compound in the presence of an organic silicon compound having an Si-O bond in the presence or absence of an ester of an organic acid, with the ester and treating the solid product thus obtained with an ether compound and TiCl₄ or a mixture of an ether compound, TiCl₄ and the ester of an organic acid.

4. A process for producing a propylene-ethylene random copolymer as defined in claim 1, which comprises copolymerizing propylene with ethylene in the gas phase in a concentration of ethylene in the gas phase of 2 to 5% by volume, using a catalyst comprising:
(A) a solid catalyst component comprising magnesium, titanium, a halogen and an electron donor;
(B) an organoaluminum compound having at least one Al-carbon bond in its molecule; and
(C) an electron donative compound, the molar ratio of the component (C) to an Al atom in the component (B) being from 0.15 to 1.0.

5. A process for producing a propylene-ethylene random copolymer according to claim 4, wherein the component (A) is obtainable as defined in claim 3.

6. A film obtainable by melt-extruding a propylene-ethylene random copolymer according to claim 1, 2 or 3.

7. A film according to claim 6 having a bleed whitening (Δhaze) of not more than 1.5%, a heat-sealing temperature of not more than 130°C and a Young's modulus of not less than 2500 kg/cm².

8. A propylene-ethylene random copolymer according to claim 1, 2 or 3 in shaped form.

9. A film laminate comprising a heat sealing layer, which layer comprises a propylene-ethylene random copolymer according to claim 1, 2 or 3.

## Patentansprüche

1. Statistisches Propylen-Ethylen-Copolymer, erhältlich durch Copolymerisation von Propylen mit Ethylen in der Gasphase mit einem Katalysator umfassend:
(A) eine feste Katalysatorkomponente, umfassend Magnesium, Titan, ein Halogenatom und einen Elektronendonator;
(B) eine Organoaluminiumverbindung mit mindestens einer Al-Kohlenstoff-Bindung in ihrem Molekül; und
(C) eine Elektronen abgebende Verbindung;
wobei
(1) der Ethylengehalt (E) des Copolymers 4,0 bis 6,5 Gew.-% beträgt,
(2) der Gehalt (D) des bei 20°C in Xylol löslichen Teils des Copolymers D ≤ E + 1,5 (Gew.-%) genügt und
(3) der Schmelzindex des Copolymers 3 bis 20 g/10 Minuten beträgt.

2. Statistisches Propylen-Ethylen-Copolymer nach Anspruch 1, wobei das Molverhältnis der Komponente (C) zu einem Al-Atom in der Komponente (B) in dem Katalysator 0,15 bis 1,0 beträgt, und die bei 135°C in Tetralin gemessene Grenzviskosität nicht kleiner als 2,0 dl/g ist.

3. Statistisches Propylen-Ethylen-Copolymer nach Anspruch 1, wobei die Komponente (A) durch Behandeln eines festen Produkts, das durch Reduktion einer Alkoxytitanverbindung mit einer Organomagnesiumverbindung in Gegenwart einer organischen Siliziumverbindung mit einer Si-O-Bindung in Gegenwart oder Abwesenheit eines Esters einer organischen Säure erhältlich ist, mit dem Ester und Behandeln des so erhaltenen festen Produkts mit einer Etherverbindung und TiCl₄ oder einem Gemisch einer Etherverbidnung, TiCl₄ und dem Ester einer organischen Säure erhältlich ist.

4. Verfahren zur Herstellung eines statistischen Propylen-Ethylen-Copolymers wie in Anspruch 1 gekennzeichnet, umfassend die Copolymerisation von Propylen mit Ethylen in der Gasphase mit einer Konzentration von Ethylen in der Gasphase von 2 bis 5 Volumen-% unter Verwendung eines Katalysators umfassend:
(A) eine feste Katalysatorkomponente, umfassend Magnesium, Titan, ein Halogenatom und einen Elektronendonator;
(B) eine Organoaluminiumverbindung mit mindestens einer Al-Kohlenstoff-Bindung in ihrem Molekül; und
(C) eine Elektronen abgebende Verbindung, wobei das Molverhältnis der Komponente (C) zu einem Al-Atom in der Komponente (B) 0,15 bis 1,0 beträgt.

5. Verfahren zur Herstellung eines statistischen Propylen-Ethylen-Copolymers nach Anspruch 4, wobei die Komponente (A) wie in Anspruch 3 beschrieben, erhältlich ist.

6. Folie, erhältlich durch Schmelzextrusion eines statistischen Propylen-Ethylen-Copolymers nach einem der Ansprüche 1, 2 oder 3.

7. Folie nach Anspruch 6, mit einem Ausbleichen (Δ Schleier) von nicht stärker als 1,5%, einer Wärmeversiegelungstemperatur von nicht höher als 130°C und einem Young's Modul von nicht kleiner als 2500 kg/cm².

8. Statistisches Propylen-Ethylen-Copolymer nach einem der Ansprüche 1, 2 oder 3 in geformtem Zustand.

9. Folienlaminat, umfassend eine Wärmeversiegelungsschicht, wobei die Schicht ein statistisches Propylen-Ethylen-Copolymer nach einem der Ansprüche 1, 2 oder 3 umfaßt.

## Revendications

1. Copolymère propylène-éthylène statistique qui peut être obtenu par copolymérisation du propylène avec l'éthylène en phase gazeuse, avec un catalyseur comprenant :
(A) un composant de catalyseur solide comprenant du magnésium, du titane, un halogène et un donneur d'électrons ;
(B) un composé d'organoaluminium ayant au moins une liaison Al-carbone dans sa molécule ; et
(C) un composé donneur d'électrons ;
où
(1) la teneur en éthylène (E) du copolymère est de 4,0 à 6,5% en masse ,
(2) la teneur (D) en la partie soluble dans le xylène à 20°C du copolymère satisfait D ≤ E + 1,5 (% en masse), et
(3) l'indice de fusion du copolymère est de 3 à 20 g/10 minutes.

2. Copolymère propylène-éthylène statistique selon la revendication 1 où le rapport molaire du composant (C) à un atome de Al dans le composant (B) dans le catalyseur est de 0,15 à 1,0 et la viscosité intrinsèque mesurée dans la tétraline à 135°C est au moins égale à 2,0 dl/g.

3. Copolymère propylène-éthylène statistique selon la revendication 1 où le composant (A) peut être obtenu par traitement d'un produit solide, qui peut être obtenu par réduction d'un composé d'alcoxytitane avec un composé d'organomagnésium en présence d'un composé du silicium organique ayant une liaison Si-O en présence ou en l'absence d'un ester d'un acide organique, avec l'ester et traitement du produit solide ainsi obtenu avec un composé éthéré et TiCl₄ ou un mélange d'un composé éthéré, de TiCl₄ et de l'ester d'un acide organique.

4. Procédé pour produire un copolymère propylène-éthylène statistique tel que défini dans la revendication 1 qui comprend la copolymérisation du propylène avec l'éthylène en phase gazeuse à une concentration d'éthylène dans la phase gazeuse de 2 à 5% en volume, au moyen d'un catalyseur comprenant :
(A) un composant de catalyseur solide comprenant du magnésium, du titane, un halogène et un donneur d'électrons ;
(B) un composé d'organoaluminium ayant au moins une liaison Al-carbone dans sa molécule ; et
(C) un composé donneur d'électrons, le rapport molaire du composant (C) à un atome de Al dans le composant (B) étant de 0,15 à 1,0.

5. Procédé pour produire un copolymère propylène-éthylène statistique selon la revendication 4 où le composant (A) peut être obtenu comme défini dans la revendication 3.

6. Film qui peut être obtenu par extrusion à l'état fondu d'un copolymère propylène-éthylène statistique selon la revendication 1, 2 ou 3.

7. Film selon la revendication 6 ayant un blanchissement de migration (Δvoile) d'au plus 1,5%, une température de thermosoudage d'au plus 130°C et un module d'Young d'au moins 2500 kg/cm².

8. Copolymère propylène-éthylène statistique selon la revendication 1, 2 ou 3 sous forme mise en forme.

9. Stratifié de films comprenant une couche de thermosoudage, laquelle couche comprend un copolymère propylène-éthylène statistique selon la revendication 1, 2 ou 3.
